# EUROPEAN PATENT SPECIFICATION

(11) **EP 3 404 159 B1**
(45) Date of publication and mention of the grant of the patent: **13.05.2020**
(21) Application number: 18181166.2
(22) Date of filing: 24.05.2016
(51) Int. Cl.: E04B 7/02, E04B 7/24, E04C 3/00, E04C 3/11, E04C 3/17, E04B 7/06, F16B 5/07, E04B 1/24, E04B 1/26

(54) **TRUSSES FOR USE IN BUILDING CONSTRUCTION**
TRÄGER ZUR VERWENDUNG IM GEBÄUDEBAU
TREILLIS POUR UNE UTILISATION DANS LA CONSTRUCTION DE BÂTIMENTS

(30) Priority: 02.06.2015 AU 2015902094
(43) Date of publication of application: 21.11.2018
(62) Divisional of application: 16171136.1
(73) Proprietor: Illinois Tool Works, Inc., Glenview, Illinois 60025 (US)
(72) Inventor: KENNELLY, Bernard Joseph, North Balgowlah, New South Wales 2093 (AU); PAULL, Mike, Glenview, IL Illinois 60025-4075 (US)
(74) Representative: HGF Limited

(56) References cited:
- WO-A1-2014/186906
- JP-A- S6 458 745
- JP-B2- 2 847 382
- US-A- 3 175 650

## Description

The present invention in one aspect relates to trusses in use for building construction, particularly in the construction of roofs.

Prior art includes at least WO-A1-2014/186906, which discloses all the features of the preamble of claim 1, US-A 3 175 650, JP-A-S6458745 and JP-B2-2 847382.

In some types of building construction it is conventional practice to construct the roof using trusses prefabricated in a factory situation and transported to site for erection onto wall frames or other wall structure of the building. Although the main structure of a roof will normally be formed by a series of trusses arranged in spaced parallel relation, in the construction of a complex roof such as one having hips and/or gables further trusses are installed to a face of one or more of other trusses within the structure after installation so as to extend transversely from the face of that truss, usually at right angles thereto. Typically those further trusses will also be of prefabricated construction whereby substantially the entire basic roof structure can be assembled on site from prefabricated components. Although construction of a roof from prefabricated trusses removes much of the skill which would otherwise be needed to construct a roof and, of course, enables relatively quick construction, nevertheless installing and fastening supplementary trusses within the main structure by installing to the face of a main truss for instance, can add a degree of complexity. The supplementary trusses require separate handling and need to be accurately located relative to the main truss and then attached using suitable brackets. This has to be done by people working at the height of the roof of course, and does involve a degree of skill. The environment in which the installers are working at roof level is not a stable environment and required "safe work practices" are not always adhered to. Many of those working on site can be at risk until a main truss and its supplementary trusses are installed, temporarily braced, and made stable. Additionally, issues sometimes issues arise through absence of adequate documentation for identification and accurate placement of the supplementary trusses.

The present invention in one aspect seeks to ameliorate these difficulties.

In the installation of the trusses they need to be anchored to the underlying wall structure of the building, typically by fastening the bottom chord of a truss to the top plate of an underlying wall frame and which itself is usually of prefabricated form. A typical attachment consists of brackets fastened by nails to the top plate and bottom chord, itself quite a time consuming exercise carried out at roof level. It is described an attachment system which provides quicker fastening between the truss and top plate or other underlying structure during installation.

It is described a truss assembly for use in building construction, comprising a first truss and one or more second trusses attached to the first truss to extend transversely to a face of the first truss upon erection of the truss assembly, wherein the or each second truss is hingedly connected to the first truss for swinging movement about a substantially vertical axis between a folded configuration in which the second truss lies adjacent the face of the first truss and an erected configuration in which the second truss extends transversely to said face.

It is also described a fastening for coupling two components of a building structure comprising a first part for attachment to one of the components and a second part for attachment to the other of the component, the first and second parts each being of plate-like form, the first part providing a multiplicity of locking projections and the second part providing a multiplicity of apertures arranged in a configuration equivalent to that of the locking projections of the first part such that when the two parts are applied together in face-to-face relation the locking projections of the first part can extend through the apertures of the second part and lock to the second part to thereby lock the two parts together against separation of the two parts.

The invention is as recited by claim 1.

Embodiments of the invention will now be described by way of example only with reference to the accompanying drawings in which:
Figure 1 shows in exploded form components of a truss assembly, which does not form part of the invention;
Figure 2 shows the truss assembly, which does not form part of the invention, in its assembled configuration with supplementary trusses hingedly attached to a main truss and the supplementary trusses in a folded configuration against the main truss;
Figure 3 shows schematically a typical roof structure as could be formed from truss assemblies, which do not form part of the invention ;
Figure 4 is a side view showing respective parts of a quick-action fastening, which does not form part of the invention, the parts being shown prior to coupling of the two parts;
Figure 5 is a perspective view equivalent to Figure 4 ;
Figure 6 is a side view similar to Figure 4 but showing the two parts in their coupled relation;
Figure 7 is a perspective view corresponding to Figure 6 ;
Figure 8, which does not form part of the invention, is a view corresponding to Figure 1 but showing a modification in which rafter extensions are hinged to the supplementary trusses;
Figures 9 and 9A, which do not form part of the invention show highly schematically successive stages in folding out the rafter extensions to brace an adjacent main truss during installation thereof;
Figure 10, which does not form part of the invention, shows highly schematically a braced truss assembly for use in forming a hip end of a roof;
Figure 11 shows in more detail the truss assembly of Figure 10 but in a folded configuration for transportation and craning;
Figure 11A shows a detail of Figure 11 ;
Figure 12 is a view similar to Figure 11 but showing the assembly in its erected configuration;
Figure 13, which forms part of the invention is a highly schematic view of a truss assembly for use in forming a gable end of a roof;
Figure 14 shows in more detail the assembly of Figure 13 but in a folded configuration for transportation and craning;
Figure 14A shows a detail of Figure 14 ; and
Figure 15 is a view similar to Figure 14 but showing the assembly in its erected configuration.

It is described a prefabricated trusses which, in the assembled roof structure are to be attached to and extend transversely from another prefabricated truss, usually one of the larger trusses and which will be referred to for simplicity as a "main" truss are assembled to the main truss by hinges as part of the pre-fabrication process. The hinges provide a secure connection between the main truss and the other trusses, referred to for simplicity as "supplementary trusses", and permit the supplementary trusses to be swung from a position in which a face of the supplementary truss lies adjacent a face of the main truss for transportation to site on the bed of a truck and lifting into position on site, typically by means of a crane. When the main truss is in position on the top plate or other underlying structure, the supplementary trusses can then be swung outwardly from the face of the main truss into its required orientation transversely to the main truss. Depending on the design of the roof structure, that orientation can be at 90° to the main truss or at an acute angle.

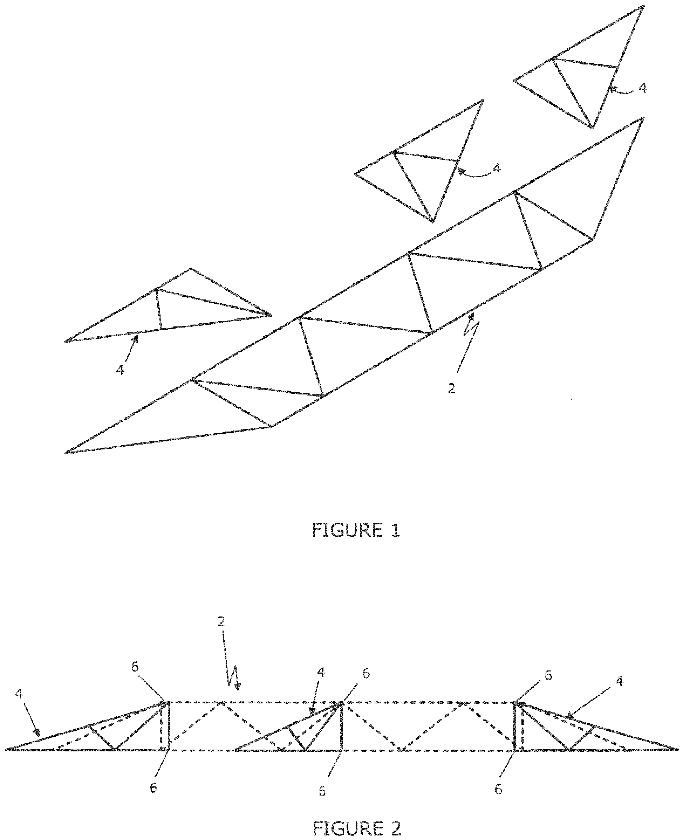

Figure 1 shows by way of example a main truss 2 and a set of three supplementary trusses 4 prior to assembly together by hinges as discussed above. In the assembled roof, the supplementary trusses are intended to form a hip end of the roof. Figure 2 shows the supplementary trusses 4 attached to the main truss 2 by the hinges and folded to lie with their faces against the adjacent face of the main truss for transportation to site and for lifting into position. In the particular design shown, each supplementary truss 4 is hinged to the top chord and bottom chord of the main truss 2 at hinge points 6, the hinge axis of each supplementary truss 4 being vertical considered in relation to the main truss when lying in a vertical plane in its installed condition. Although the supplementary trusses are hinged to the top and bottom chords of the main truss by respective upper and lower hinges, other placements of the hinges would be possible with different designs of main and supplementary trusses. However it is envisaged that in most circumstances there would be at least an upper and lower hinge for each supplementary truss although it is conceivable that a single longer hinge might suffice in some circumstances. The hinges are fixed to the trusses by any suitable means such as screwing, nailing, or gluing, or by nail-plates. The primary function of the hinged connection between the supplementary truss and main truss is to enable the supplementary truss to be swung out from its folded condition assumed during transportation and lifting and, as such, the hinges only need to have capacities to withstand the handling and installation loads. Although in principle they could also be designed to withstand in-service loading in the completed roof structure, in practice it is envisaged supplementary fixings would be subsequently installed to withstand the in-service loading, these supplementary fixings being fitted later in the installation process when the majority of the roof structure is in place and braced to provide a stable and safe working environment.

In the example shown, each of the supplementary trusses is of a length which enables the set of supplementary trusses to be folded flat against the face of the main truss and which is desirable as it enables a series of such truss assemblies to be stacked flat for transportation. Nevertheless the overall concept would still be applicable for use with somewhat longer supplementary trusses in which, in their folded condition for transportation, an outer end of one supplementary truss might overlap the inner end of the adjacent supplementary truss whereby in its folded state it is inclined to the adjacent face of the main truss rather than lying flat against it.

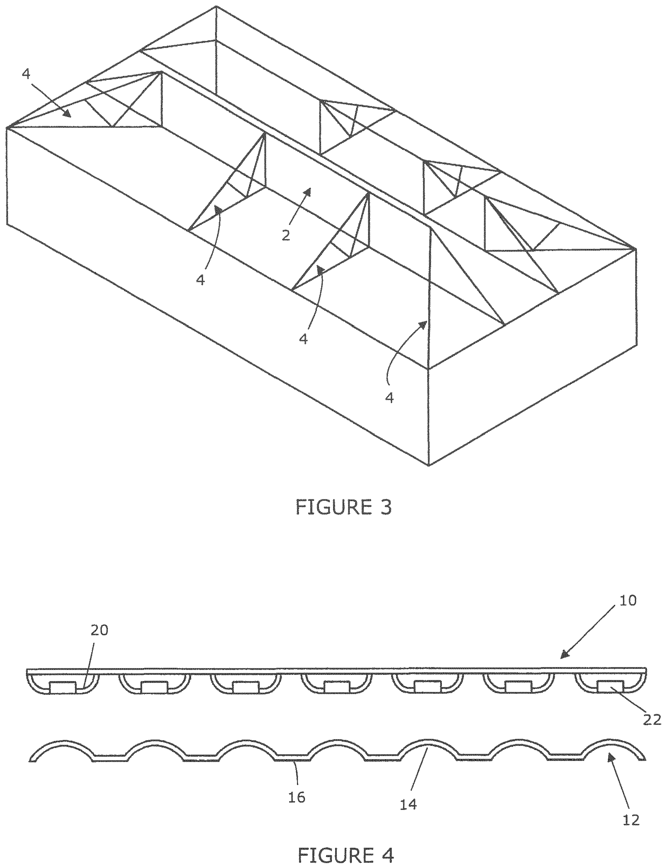

As the hinged assembly of the supplementary trusses to the main truss takes place as part of the pre-fabrication process in the factory, the supplementary trusses will be accurately positioned relative to the main truss. All that is required is for the supplementary truss to be swung about the vertical hinge axis into its required orientation transverse to the main truss and fastened at its outer end to underlying wall structure, usually the top plate of the underlying wall frame. The example which has been given is of a hip formed with three supplementary trusses hinged to the main truss. It will readily be understood that there may be more than or less than three supplementary trusses in such a structure and the general principles described herein are applicable to a wide range of other roof structures such as gables or valleys defined by trusses in mutually transverse orientations. Figure 3 shows schematically a hip structure formed by a main truss 2 and four supplementary trusses 4.

Although as just described the hinged assembly of the supplementary trusses to the main truss is undertaken as part of the pre-fabrication in a factory situation, nevertheless many of the advantages provided can be achieved with hinges pre-installed to the main truss during fabrication with the connection to the supplementary trusses being completed on-site prior to lifting into position with the supplementary trusses being folded against the face of the main truss during lifting. This enables the main truss and supplementary trusses to be transported to sites separately and may be necessary in circumstances where the length of the supplementary trusses causes difficulties in transportation when in their folded position against the main truss.

As briefly discussed at the outset, following erection into position roof trusses are usually fixed to the underlying top plate or other structure by brackets nailed to the top plate and lower chord of the truss, typically using a nail gun for this purpose. Another aspect relates to a quick-connect two-part fastening pre-installed to the truss and top plate during the pre-fabrication of the truss and wall frame and which does not require working with a nail gun at height to make the connection. A two-part fastening will now be described in detail. While the fastening is being described within the context of fastening a truss to a wall plate, the fastening has applicability in other situations where a strong, permanent, mechanical connection is required between components. For example it could be used to provide a connection between a main truss and further supplementary trusses (so-called jack trusses, for example) in the type of structure previously discussed, after erection and stabilisation of the main truss by the hinged supplementary trusses.

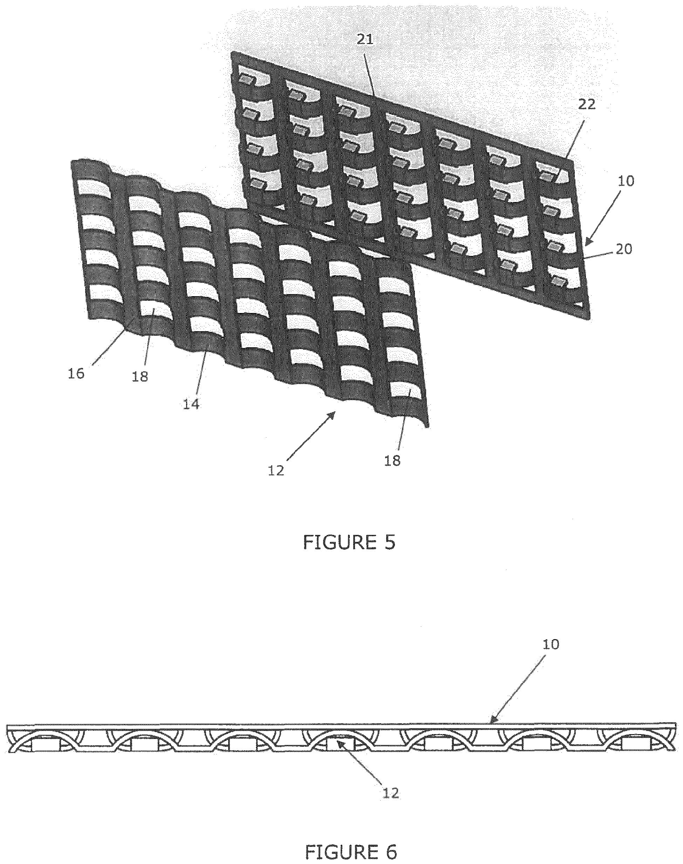

With reference to Figures 4 to 7 the quick-connect fastening comprises male and female parts 10, 12 each of plate-like form, and each preferably being pressed out of metal sheet. The female part 12 is shaped to form a series of parallel crests 14 of arcuate form extending across the width of the plate, with valleys 16 in the form of flat lands between adjacent crests. Each crest is apertured along its length with a row of parallel slots 18 which are clearly shown in Figure 5. The male part 10 is profiled in a manner generally corresponding to that of the female part except that each of the crests is defined by a row of generally parallel ribs 20 each of a width and peripheral configuration which enables the rib 20 to fit within one of the slots 18 when the face of one of the two parts is applied against the face of the other part. Flat lands 21 are formed between each row of ribs 20. The spacing between adjacent ribs 20 in each row of ribs corresponds to that between adjacent slots 18 in each row of slots, and the rows of ribs and slots are at the same spacing. A locking lug or tang 22 projects outwardly from the opposite edges of each rib 20, with the two tangs of each rib being in a divergent configuration. The configuration is such that when a rib 20 is pressed into a corresponding slot 18 in the female part, its two tangs 22 will deflect resiliently inwardly to enable the rib to enter the slot and when the two tangs have passed through the slot the two tangs will move outwardly under their inherent resilience to their original divergent configuration to engage behind the outer surface of the female plate in the zone of the slots in order to provide a positive locking engagement (see Figure 6).

Although a locking tang extends from each of two opposite sides of each rib and which is the preferred arrangement, in principle locking could be achieved by just a single tang on each rib. In a further alternative, resiliently deflectable locking tangs could be formed on one or both sides of each slot with the tangs then being deflected by passage of the ribs through the slots on engagement of the two parts and then returning to their original configuration to positively lock the ribs within the slots against withdrawal.

In the example given of an attachment of the bottom chord of a truss to the top plate of a wall frame, one of the two parts, the female part for example, is fixed to the top plate with its slotted crests facing upwardly and the other part, in this case therefore the male part, is fixed to the underside of the bottom chord of the truss with its locking ribs facing downwardly. Fixing can occur by any suitable means such as screwing, nailing or gluing, or by nail-plates. Nailing or other fixing can occur through holes (the holes are not shown) formed in the flat lands 16, 21 of both plates and which will be in direct contact with the top plate and bottom chord. It will be understood that if the truss with its male plate 10 is pushed down onto the female plate 12 on the top plate to engage the locking ribs 20 within the slots 18, a positive locked connection between the two can be achieved very quickly. The connection is very strong and is not capable of release by application of reversed forces. In a typical situation where the wall frames and trusses and other components are prefabricated in a factory situation, the two parts of each fastening are installed during pre-fabrication to facilitate easy and accurate location of the truss relative to the wall frame during erection with coupling of the truss to the top plate being achieved very quickly by engagement of its coupling part with the corresponding coupling part already fixed to the top plate.

It will be understood that in this situation if the truss is perfectly aligned with the top plate, all of the locking ribs in the male part will engage and lock with the corresponding slots in the female part. Although in principle perfect alignment could arise (or could be achieved by manoeuvring the truss during installation) given that both parts of the fastening are installed in a factory situation which would permit high accuracy in placement, in practice this may not be possible in the erected structure for a variety of reasons, for example some inaccuracy in the laying of a concrete slab or other footings, inaccuracy in setting of the wall frames and so forth. The design of the two-part fastening provides a multiplicity of fixing points in a fixing matrix formed by parallel rows of locking ribs and slots. The sizing of the two parts in conjunction with the number of fixing points formed within the matrix can be determined so that even with a maximum expected degree of longitudinal and/or lateral misalignment between the two fastening parts likely to arise when the truss is lowered onto the top plate, a sufficient number of locking ribs will engage within the slots to provide the required secure connection between the truss and top plate. In typical Australian building conditions, the misalignment is likely to be no more than 20mm whereby the two plates of the fastening can be designed to account for the eventuality.

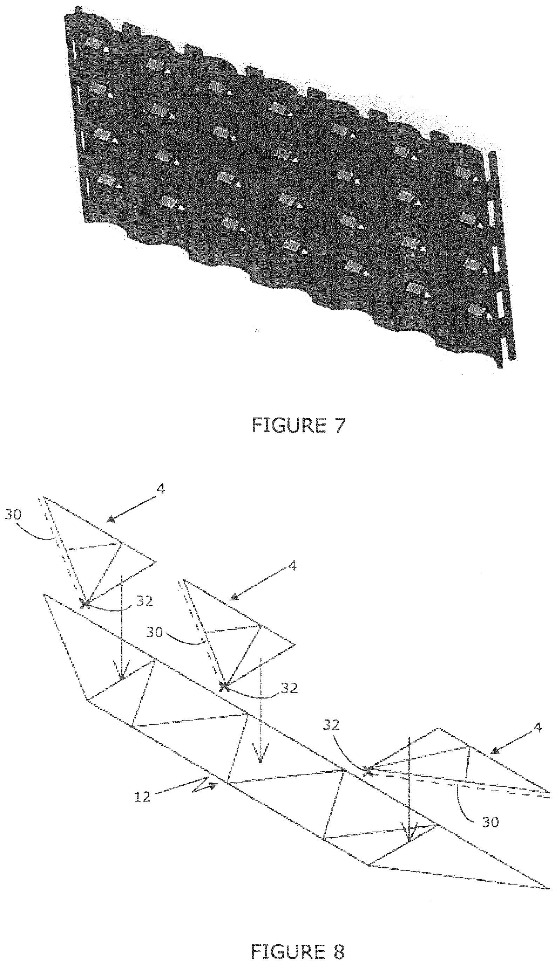

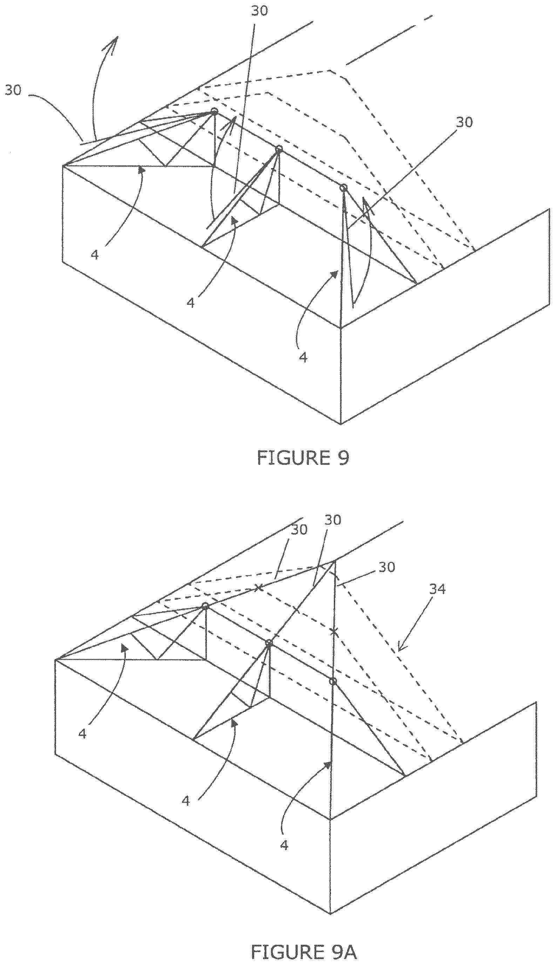

In a further development to facilitate installation of the roof structure, rafter extensions can be hinged to the top chords of the supplementary trusses at the inner ends thereof. During transportation and erection of the truss assembly as previously described, the extensions lie along the top chords of the supplementary trusses. After erection of the main truss and stabilisation by folding out of the supplementary trusses, the rafter extensions are hinged out to extend beyond the main truss into the zone occupied (or to be occupied) by an adjacent main truss of the structure whereby the rafter extensions when fitted to the top chord of the adjacent truss will serve to stabilise that truss during its installation. The extensions remain in position to form part of the overall roof structure and may serve to carry tile battens in the structure. This concept is shown schematically in Figures 8, 9 and 9A. In Figure 8 which shows the truss assembly in exploded form, the rafter extensions are shown in the dashed lines 30, with the hinge connection to the top chord of the associated supplementary trusses being shown at 32. Figure 9A shows the extensions 30 having been folded out to their extended configuration after erection of the truss assembly, and being connected to the top chord of the next adjacent main truss 34; Figure 9 shows the extensions 30 at the commencement of folding them out.

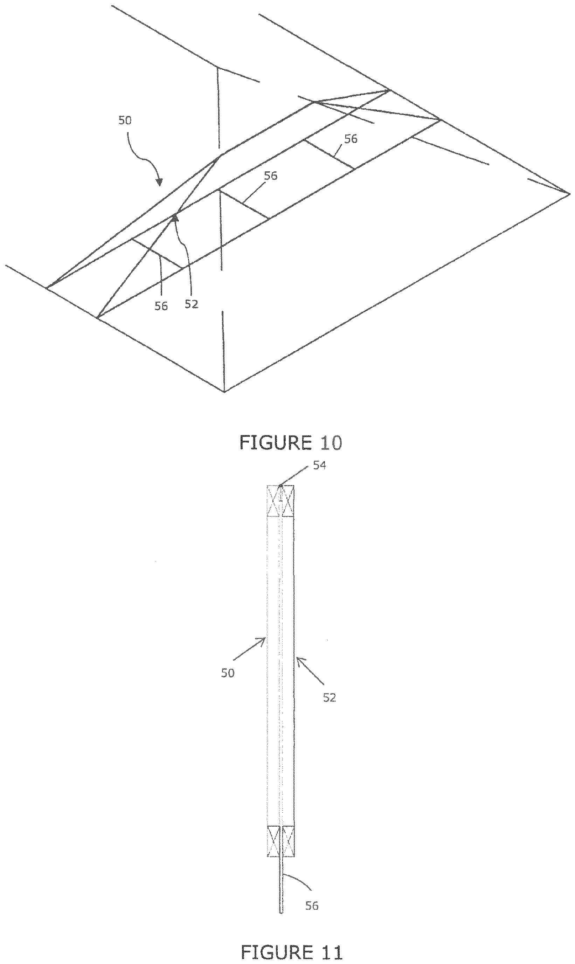

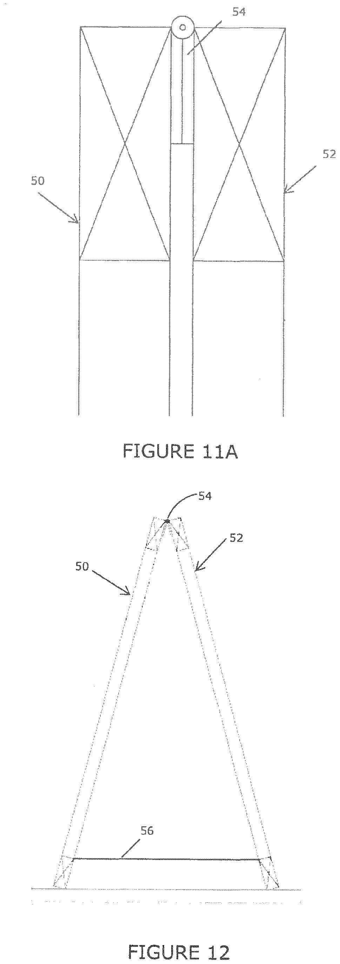

Figures 10 to 12 show schematically components for forming a braced structure of part of a roof hip end and to which further trusses or other structure can be subsequently attached without the need for any additional temporary bracing. The structure comprises two truncated trusses 50, 52 hinged together at their top chord preferably by two or more hinges 54 spaced along the top chord whereby the two trusses are pivotal about a horizontal axis adjacent the top chords between a folded configuration in which the trusses are in side-by-side relation (see Figures 11 and 11A) for transportation to site and craning into position on site and an erected configuration in which the two trusses are spread apart at their bottom chords and are thereby mutually inclined (see Figures 10 and 12). The bottom chords of the two trusses are interconnected by two or more pre-installed links 56 spaced along the bottom chords of the two trusses and which, in the erected configuration form rigid struts to provide rigid bracing between the bottom chords of the two trusses whereby in the erected or deployed configuration the assembly of the two trusses is inherently stable and can be placed in that condition on the top plate of the underlying structure. The structure as shown has three such links 56 but it will be understood that the number of required links will be dependent on the overall length of the two trusses.

Although the links 56 have only been illustrated schematically in the drawings, their structure is such that they must permit the trusses to lie in their folded configuration for transportation and craning and then permit the trusses to be swung into their erected configuration in which they then form rigid struts between the two bottom chords. A form of link which can achieve that consists of two arms hinged together at one end and each hinged at an outer end to respective one of the two bottom chords whereby in a folded configuration the two arms are lying in approximately parallel relation or are inclined by a small angle whereas in the erected configuration the two arms are substantially longitudinally aligned to constitute a bracing strut. Rigidity of the strut thus formed can be achieved in a number of different ways. One way of achieving this is to configure the hinged connection between the two arms in such a manner that as the trusses reach their fully erected configuration, the arms move slightly beyond a position in which they are longitudinally aligned into a locked over-centre position in which the arms provide a rigid lock against movement of the two bottom chords one towards the other. An alternative way of achieving the required rigidity is to provide a screw-operated lock or clamp between the inner ends of the two arms when the erected configuration is reached.

When the assembly consisting of the two rigidly braced deployed trusses is positioned on the top plate of the underlying structure and attached thereto and inherently stable as a consequence of its configuration, further trusses can be applied working from that stable assembly.

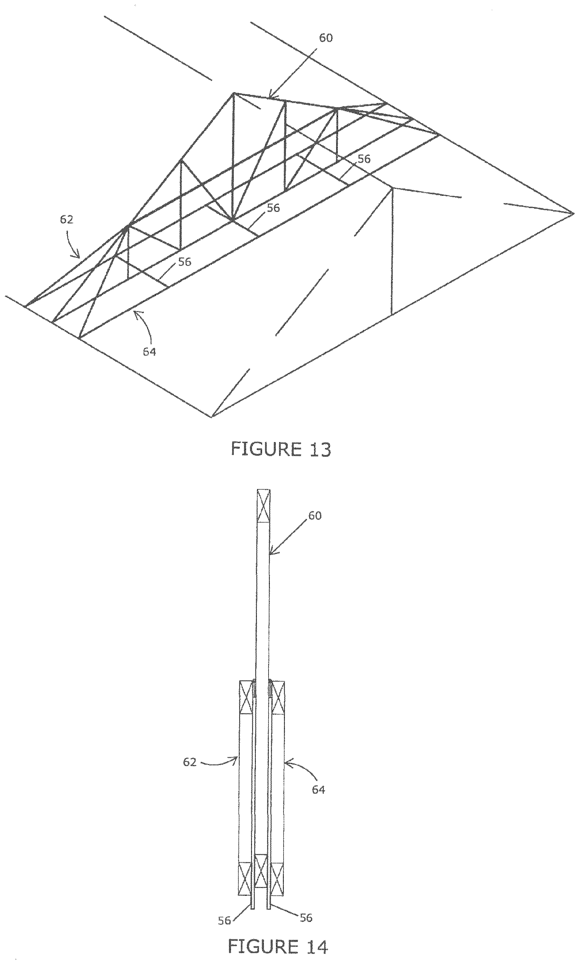

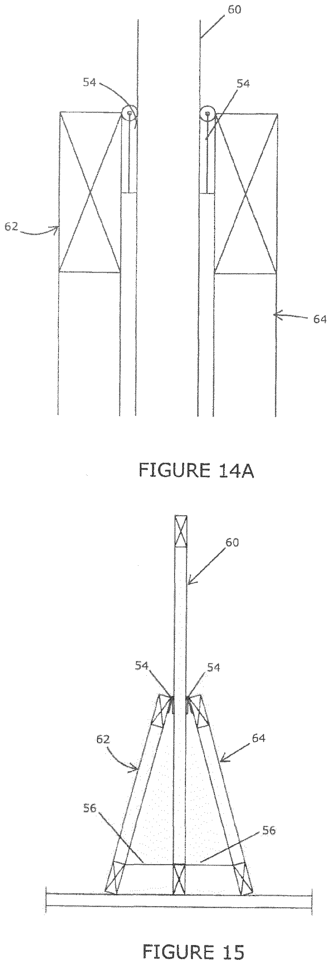

According to the invention, Figures 13 to 15 relate to a similar concept to that of Figures 10 to 12 but applied to structure for forming a gable end consisting of a central gable truss 60 and two truncated trusses 62, 64 on opposite sides of the central truss 60 and each connected by hinges 54 to an intermediate chord of the central truss for movement about a horizontal axis adjacent the intermediate chord between a folded configuration for transportation and craning into position in which the three trusses lay side-by-side (see Figures 14 and 14A) to an erected configuration in which the truncated trusses are pivoted outwardly into a stable condition inclined to the central truss (see Figures 13 and 15) and rigidly braced in that condition by struts extending between the bottom chord of each of the truncated trusses and the bottom chord of the central truss. The struts are formed by links 56 of the form described with reference to Figures 10 to 12.

## Claims

1. A truss assembly for use in building construction comprising a first truss (60), a second truss (62) attached to the first truss for swinging movement about a first substantially horizontal axis between a folded configuration in which the second truss lies adjacent to a face of the first truss and an erected configuration in which a bottom chord of the second truss is spaced outwardly from the first truss, and first linking means (56) pre-assembled to the first and second trusses and which in the erected configuration form a rigid coupling between the first and second trusses to form a stable braced structure, the assembly further comprises a third truss (64) at an opposite face of the first truss to the second truss and hinged to the first truss for swinging movement about a second substantially horizontal axis between a folded configuration in which the third truss lies adjacent the opposite face of the first truss and an erected configuration in which a bottom chord of the third truss is spaced outwardly from the first truss, and second linking means (56) pre-assembled to the first and third trusses and extending between the first and third trusses to rigidly brace the third truss from the first truss in the erected configuration, **characterized in that** the first truss forms a central gable truss and the second and third trusses (62, 64) are two truncated trusses on opposite sides of the central gable truss (60) and each connected by hinges (54) to an intermediate chord of the central gable truss for movement about the first and second horizontal axes respectively adjacent the intermediate chord.

2. A truss assembly according to claim 1, wherein the first linking means (56) comprises a plurality of links extending between bottom chords of the first and second trusses and spaced along the length of the bottom chords, the links when in the erected configuration forming rigid bracing struts between the first and second trusses.

3. A truss assembly according to claim 1 or claim 2, wherein the first linking means (56) comprises a plurality of links each consisting of two arms hinged together at an inner end and hinged at an outer end to a respective one of the first and second trusses, wherein in the folded configuration of the assembly the two arms lie in generally side-by-side relation and in the erected configuration the two arms are approximately longitudinally aligned to provide a rigid bracing strut.

4. A truss assembly according to claim 1, wherein the second linking means (56) comprises a plurality of links extending between bottom chords of the first and third trusses and spaced along the length of the bottom chords, the links when in the erected configuration forming rigid bracing struts between the first and second trusses.

5. A truss assembly according to claim 1 or claim 4, wherein the second linking means (56) comprises a plurality of links each consisting of two arms hinged together at an inner end and hinged at an outer end to a respective one of the first and thirds trusses, wherein the folded configuration of the assembly the two arms lie in generally side-by-side relation and in the erected configuration the two arms are approximately longitudinally aligned to provide a rigid bracing strut.

6. A truss assembly according to claim 1 to 5, wherein the assembly is configured for use in forming a gable end of a roof the second and third trusses are hinged at upper chords thereof to the intermediate chord of the central gable truss.

## Patentansprüche

1. Trägeranordnung zur Verwendung im Gebäudebau, die einen ersten Träger (60), einen am ersten Träger befestigten zweiten Träger (62) für eine Schwenkbewegung um eine erste im Wesentlichen horizontale Achse zwischen einer zusammengeklappten Konfiguration, in der der zweite Träger an eine Fläche des ersten Trägers angrenzt, und einer aufgerichteten Konfiguration, in der ein unterer Flansch des zweiten Trägers vom ersten Träger nach außen beabstandet ist, und eine erste Verbindungseinrichtung (56), die am ersten und zweiten Träger vormontiert ist und in der aufgerichteten Konfiguration eine biegesteife Kopplung zwischen dem ersten und zweiten Träger ausbildet, um eine stabile Versteifungsstruktur auszubilden, umfasst, wobei die Anordnung ferner einen dritten Träger (64), der an der dem zweiten Träger entgegengesetzten Seite des ersten Trägers für eine Schwenkbewegung um eine zweite im Wesentlichen horizontale Achse zwischen einer zusammengeklappten Konfiguration, in der der dritte Träger an die entgegengesetzte Fläche des ersten Trägers angrenzt, und einer aufgerichteten Konfiguration, in der ein unterer Flansch des dritten Trägers vom ersten Träger nach außen beabstandet ist, gelenkig am ersten Träger befestigt ist, und eine zweite Verbindungseinrichtung (56), die am ersten und dritten Träger vormontiert ist und sich zwischen dem ersten und dritten Träger erstreckt, um den dritten Träger in der aufgerichteten Konfiguration vom ersten Träger zu versteifen, umfasst, **dadurch gekennzeichnet, dass** der erste Träger einen mittleren Giebelträger ausbildet und der zweite und dritte Träger (62, 64) zwei verkürzte Träger auf beiden Seiten des mittleren Giebelträgers (60) sind und für eine Bewegung um die erste bzw. zweite an den Zwischenflansch angrenzende horizontale Achse jeweils über Scharniere (54) mit einem Zwischenflansch des mittleren Giebelträgers verbunden sind.

2. Trägeranordnung nach Anspruch 1, wobei die erste Verbindungseinrichtung (56) mehrere Verbindungen umfasst, die sich zwischen den unteren Flanschen des ersten und zweiten Trägers erstrecken und entlang der Länge der unteren Flansche beabstandet sind, wobei die Verbindungen in der aufgerichteten Konfiguration biegesteife Versteifungsstreben zwischen dem ersten und zweiten Träger ausbilden.

3. Trägeranordnung nach Anspruch 1 oder Anspruch 2, wobei die erste Verbindungseinrichtung (56) mehrere Verbindungen umfasst, die jeweils aus zwei Armen bestehen, die an einem inneren Ende gelenkig aneinander befestigt sind und an einem äußeren Ende am ersten bzw. zweiten Träger gelenkig befestigt sind, wobei die zwei Arme in der zusammengeklappten Konfiguration der Anordnung im Allgemeinen nebeneinander liegen und die zwei Arme in der aufgerichteten Konfiguration in etwa in Längsrichtung ausgerichtet sind, um eine biegesteife Versteifungsstrebe vorzusehen.

4. Trägeranordnung nach Anspruch 1, wobei die zweite Verbindungseinrichtung (56) mehrere Verbindungen umfasst, die sich zwischen den unteren Flanschen des ersten und dritten Trägers erstrecken und entlang der Länge der unteren Flansche beabstandet sind, wobei die Verbindungen in der aufgerichteten Konfiguration biegesteife Versteifungsstreben zwischen dem ersten und zweiten Träger ausbilden.

5. Trägeranordnung nach Anspruch 1 oder Anspruch 4, wobei die zweite Verbindungseinrichtung (56) mehrere Verbindungen umfasst, die jeweils aus zwei Armen bestehen, die an einem inneren Ende gelenkig aneinander befestigt sind und an einem äußeren Ende am ersten bzw. dritten Träger gelenkig befestigt sind, wobei die zwei Arme in der zusammengeklappten Konfiguration der Anordnung im Allgemeinen nebeneinander liegen und die zwei Arme in der aufgerichteten Konfiguration in etwa in Längsrichtung ausgerichtet sind, um eine biegesteife Versteifungsstrebe vorzusehen.

6. Trägeranordnung nach einem der Ansprüche 1 bis 5, wobei die Anordnung zur Verwendung beim Ausbilden eines Giebelendes eines Dachs ausgelegt ist, wobei der zweite und dritte Träger an dessen oberen Flanschen am Zwischenflansch des mittleren Giebelträgers gelenkig befestigt sind.

## Revendications

1. Ensemble treillis destiné à être utilisé dans la construction de bâtiments comprenant un premier treillis (60), un deuxième treillis (62) fixé au premier treillis pour un mouvement de pivotement autour d'un premier axe sensiblement horizontal entre une configuration pliée dans laquelle le deuxième treillis est adjacent à une face du premier treillis et une configuration montée dans laquelle une membrure inférieure du deuxième treillis est espacée vers l'extérieur du premier treillis, et un premier moyen de liaison (56) préassemblé aux premier et deuxième treillis et qui forme dans la configuration montée un accouplement rigide entre les premier et deuxième treillis pour former une structure d'entretoisement stable, l'ensemble comprend en outre un troisième treillis (64) sur une face opposée du premier treillis au deuxième treillis et articulé au premier treillis pour un mouvement de pivotement autour d'un second axe sensiblement horizontal entre une configuration pliée dans laquelle le troisième treillis est adjacent à la face opposée du premier treillis et une configuration montée dans laquelle une membrure inférieure du troisième treillis est espacée vers l'extérieur du premier treillis, et un second moyen de liaison (56) préassemblé aux premier et troisième treillis et s'étendant entre les premier et troisième treillis pour maintenir rigidement le troisième treillis à partir du premier treillis dans la configuration montée, **caractérisé en ce que** le premier treillis forme un treillis central à pignon et les deuxième et troisième treillis (62, 64) sont deux treillis tronqués sur les côtés opposés du treillis central à pignon (60) et chacun relié par charnières (54) à une membrure intermédiaire du treillis central à pignon pour mouvement autour respectivement du premier et second axe horizontal adjacent à la membrure intermédiaire.

2. Ensemble treillis selon la revendication 1, dans lequel le premier moyen de liaison (56) comprend une pluralité de liaisons s'étendant entre les membrures inférieures des premier et deuxième treillis et espacées sur la longueur des membrures inférieures, les liaisons, lorsqu'elles sont dans la configuration montée, formant des entretoises rigides entre les premier et deuxième treillis.

3. Ensemble treillis selon la revendication 1 ou la revendication 2, dans lequel le premier moyen de liaison (56) comprend une pluralité de liaisons constituées chacune de deux bras articulés ensemble à une extrémité intérieure et articulés à une extrémité extérieure à l'un correspondant des premier et deuxième treillis, dans lequel dans la configuration pliée de l'ensemble, les deux bras sont généralement côte à côte et dans la configuration montée les deux bras sont approximativement alignés longitudinalement pour fournir une entretoise rigide.

4. Ensemble treillis selon la revendication 1, dans lequel le second moyen de liaison (56) comprend une pluralité de liaisons s'étendant entre les membrures inférieures des premier et troisième treillis et espacées sur la longueur des membrures inférieures, les liaisons, lorsqu'elles sont dans la configuration montée, formant des entretoises rigides entre les premier et deuxième treillis.

5. Ensemble treillis selon la revendication 1 ou la revendication 4, dans lequel le second moyen de liaison (56) comprend une pluralité de liaisons constituées chacune de deux bras articulés ensemble à une extrémité intérieure et articulés à une extrémité extérieure à l'un correspondant des premier et troisième treillis, dans lequel dans la configuration repliée de l'ensemble, les deux bras sont généralement côte à côte et dans la configuration montée les deux bras sont approximativement alignés longitudinalement pour fournir une entretoise rigide.

6. Ensemble treillis selon les revendications 1 à 5, l'ensemble étant configuré pour être utilisé pour former une extrémité de pignon d'un toit, les deuxième et troisième treillis étant articulés au niveau de leurs membrures supérieures sur la membrure intermédiaire du treillis central à pignon.
